# EUROPEAN PATENT APPLICATION

(11) **EP 1 561 782 A1**
(43) Date of publication of application: **10.08.2005**
(21) Application number: 04002801.1
(22) Date of filing: 09.02.2004
(51) Int. Cl.: C08L 23/14, B29C 65/04, B32B 27/32, C08J 5/18

(54) **High-frequency-weldable polymer mixture and processes for using the same**

(71) Applicant: Borealis Technology Oy, 06101 Porvoo (FI)
(72) Inventor: Torsdal, Kai, 3766 Sannidal (NO)
(74) Representative: Viering, Jentschura & Partner

(57) **Abstract**

New High-frequency-weldable polymer mixtures, processes for using the same and to sheets or molded articles containing said polymer mixture are described. In more detail, the present invention relates to PP grades with high frequency welding properties and to processes for using the same in blow moulding, sheet extrusion, blown film, coating, calendaring, cast film, injection moulding and fibre to none woven for automotive interior.

## Description

The present invention is directed to high-frequency-weldable polymer mixture, processes for using the same and to sheets or molded articles containing said polymer mixture. In more detail, the present invention relates to PP grades with high frequency welding properties and to processes for using the same in blow moulding, sheet extrusion, sheet calendaring, blown film, coating, cast film, injection moulding and fibre to none woven for automotive interior.

### Technological background

It is known that plastics parts can be welded in a high-frequency field. In this case, thermoplastic parts in the form of sheets or molded articles to be connected are heated to the required welding temperature in the capacitor field of a high-frequency voltage source without an auxiliary die. The sheets are seam-welded (overlapping seams welded so as to withstand shearing stress or peeling stress).

High-frequency-weldable materials are, above all, thermoplastics with polar groups, i.e., plastics with molecules, atoms or side groups that cause a charge transfer in the molecule (dipoles). When a thermoplastic of this kind enters a high-frequency alternating field, the polar groupings carry out oscillations corresponding to the excitation frequency. The oscillations lead to heat development in the thermoplastic. The dielectric loss factor is generally used as a characteristic value for the transformation of electric field energy into heat. As a rule, the sheets are not connected along the entire surface. Welding is generally restricted to line-type or frame-type contours and heating is restricted to the respective welding web region.

However, because of their non-polar character, polyolefins cannot be processed in this way. In fact, polyolefin films or sheets generally are sealed by applying external heat directly to the portions that must be sealed. However, the seal cycles are longer and the seals thus obtained are nonuniform and of poor quality, when compared with the seal cycles of a radio-frequency apparatus and the seals thereby obtained.

In order to be able to weld polyolefins in the high-frequency field also, U.S. Pat. No. 3.336.173 proposes mixing in polyamides with the polyolefins. However, molded articles made from such materials have the disadvantage that the obtained weld seams do not have adequate strength or that tearing occurs next to the weld seam.

A different solution is disclosed in EP-A-0 406 568 that describes a polypropylene-polyamide molded compound which, in addition to a polypropylene homopolymer and/or a polypropylene copolymer and a polyamide, contains an olefinic unsaturated carboxylic acid and/or an olefinic unsaturated carboxylic acid derivative. Said EP-A-0 406 568 contains no reference to the high-frequency weldability of the described molded compound.

DE-A-41 42 271 describes molded articles which contain essentially polyolefins, polyamides and adhesion promoters or bonding agents. The bonding agent is preferably a copolymer of styrene and ethylene butylene blocks grafted with maleic anhydride.

Said propylene-polyamide compounds have the disadvantage that they have a low dielectric loss factor at room temperature, as a result of which they can only absorb small amounts of energy in the high-frequency alternating field. Therefore, a disadvantageously high energy input and high welding power are required for welding this material.

On the other hand, the dielectric loss factor increases sharply as the heating of the material caused by the absorption of energy in the high-frequency field increases, resulting in a significant drop in the breakdown voltage or dielectric strength and an increased risk of dielectric breakdown. This leads to an increased reject rate.

Further, it is known that copolymers of ethylene and vinyl acetate are high-frequency-weldable. For example, JP-A-06287362 discloses a high-frequency weldable mixture of polyolefins with ethylene vinyl acetate copolymers (EVA). However, molded articles made from mixtures of this kind have only a limited thermal dimensional stability. Sheets made from such mixtures with a high EVA content tend to stick together at elevated temperatures.

A further HF-weldable polymer composition is described in EP-A1-0 688 821. Said EP-A1-0 688 821 discloses a crystalline propylene homopolymer or copolymer, and certain amounts of an elastomeric olefin copolymer soluble in xylene at ambient temperature, which elastomeric olefin copolymer contains less than 40% by weight of ethylene and has an intrinsic viscosity from 1.5 to 4 dl/g which is compounded with a minor amount of at least one polymer capable of developing heat by absorption of radio-frequency electromagnetic radiation.

Another polymer mixture which is alleged to have a sufficient high-frequency weldability and further properties is described in EP-A1-0 849 324. According to said EP-A1-0 849 324, said high-frequency-weldable polymer mixture is containing a complex mixture copolymers of ethylene with co-monomers selected from vinyl esters of saturated carboxylic acids, including alkyl acrylates and -methacrylates, and ethylene homopolymers, ethylene copolymers, propylene homopolymers and/or propylene copolymers with grafted units of unsaturated carboxylic acids, dicarboxylic acids, their esters and/or anhydrides.

In some technical fields, especially in the field of car interiors, PVC is the most commonly used plastic. PVC is currently the dominating polymer used in artificial leather applications due to it's combination of properties. The car industry has built on these properties and thus it is difficult to replace PVC by other polymers.

Some other polymers have typically been able to compete with PVC in some properties, but have failed to compete in other properties. In that respect, the combination of both being calenderable and weldable with high frequency techniques - which has been possible for PVC - has been difficult to obtain.

In the last years, the car industry has invested both financially and intellectually in hot mill calendering for the production of foil, sheet or skin, and in high frequency welding units in the confectioning of the final products for car interiors. However, satisfying results with other polymers to replace PVC have not been obtained.

It is therefore the need for plastics, preferably on polyolefin basis, having improved HF welding characteristics.

Surprisingly, it has been found out by the inventors that said requirements could be met by a specific polymer composition. According to the inventors, a thermoplastic alloy composition comprising a blend of polypropylene copolymers, polyamide, ethylene propylene rubber, ethylene methyl acrylate, processing aid and wax is very useful for coating to carriers with hot mill calenders or extruders on both sides as high frequency weldable skin for auto interior items like luggage roller-shades, sun-visors, soft pockets, seat upholstery, gearstick stocking, tarpaulins for new car protection, industrial web and carriers.

Therefore, the present invention is directed to a thermoplastic alloy composition comprising a blend of polypropylene copolymers, polyamide, ethylene propylene rubber and optionally further ingredients like fillers, additives etc. In more detail, the composition comprises:
(a) 10-70 wt.-% of a random-heterophasic PP-copolymer having a C₂ content of 1-40% and having a MFR 0.1-15 g/10min;
(b) 1-80 wt.-% of a heterophasic PP copolymer having a C₂ content of 1-40% and having a MFR 0.2-15 g/10min;
(c) 20-35 wt.-% of a polyamide,
(d) 15-35 wt.-% of an elastomeric C2-C8-copolymer, whereby the weight percentages add up to 100 wt.-%.

In a preferred embodiment of the present invention, the thermoplastic alloy composition comprises:
(a) 10-70 wt.-% of a random-heterophasic PP-copolymer having a C₂ content of 5-35% and having a MFR 0.1-15 g/10min;
(b) 1-80 wt.-% of a heterophasic PP copolymer having a C₂ content of 1-40% and having a MFR 0.2-14 g/10min;
(c) 20-35 wt.-% of a polyamide;
(d) 15-35 wt.-% of an elastomeric C2-C8-copolymer; whereby the weight percentages add up to 100 wt.-%.

Optionally, 1-10 wt.-% of a processing aid and/or 0.5-15%, preferably 0.1-10 wt.-%, more preferably 0.1-5 wt.-% of a lubricant can be contained in the inventive composition.

Preferably, the inventive composition, if it is intended for use in a blow-moulding process, comprises:
(a) 10-70 wt.-% of a random-heterophasic PP-copolymer having a C₂ content of 1-40% and having a MFR 0.1-2.0 g/10min;
(b) 20-80 wt.-% of a heterophasic PP copolymer having a C₂ content of 1-40% and having a MFR 0.2-2.0 g/10min;
(c) 20-35 wt.-% of a polyamide;
(d) 15-35 wt.-% of an elastomeric C2-C8-copolymer; and
(e) 1-10 wt.-% of a processing aid;
whereby the weight percentages add up to 100 wt.-%.

Preferably, the inventive composition, if it is not used for a blow-moulding process but is intended to be used in a sheet extrusion process or a blown-film process, comprises:
(a) 10-70 wt.-% of a random-heterophasic PP-copolymer having a C₂ content of 1-40% and having a MFR 0.1-2.0 g/10min;
(b) 1-60 wt.-% of a heterophasic PP copolymer having a C₂ content of 1-40% and having a MFR 0.2-2.0 g/10min;
(c) 20-35 wt.-% of a polyamide;
(d) 15-35 wt.-% of an elastomeric C2-C8-copolymer;
(e) 1-10 wt.-% of a processing aid.
whereby the weight percentages add up to 100 wt.-%.

Preferably, the inventive composition, if it is intended to be used in a coating and castfilm process or an injection moulding process, comprises:
(a) 10-70 wt.-% of a random-heterophasic PP-copolymer having a C₂ content of 10-40% and having a MFR 2.0-15 g/10min;
(b) 1-60 wt.-% of a heterophasic PP copolymer having a C₂ content of 1-40% and having a MFR 5-14 g/10min;
(c) 20-35 wt.-% of a polyamide;
(d) 15-35 wt.-% of a elastomeric C2-C8-copolymer;
(e) 1-10 wt.-% of a processing aid.
whereby the weight percentages add up to 100 wt.-%.

In a preferred embodiment, the inventive composition, if it is intended to be used in a calendering process comprises additionally a lubricant as compound (f). Therefore, the thermoplastic alloy composition comprises:
(a) 10-70 wt.-% of a random-heterophasic PP-copolymer having a C₂ content of 1-40% and having a MFR 2.0-15 g/10min;
(b) 1-60 wt.-% of a heterophasic PP copolymer having a C₂ content of 1-40% and having a MFR 5-14 g/10min;
(c) 20-35 wt.-% of a polyamide;
(d) 15-35 wt.-% of an elastomeric C2-C8-copolymer;
(e) 1-10 wt.-% of a processing aid; and
(f) 0.1-15 wt.-% of a lubricant;
whereby the weight percentages add up to 100 wt.-%.

In a particular preferred embodiment the thermoplastic alloy composition, if it is intended for use in a calendering process, comprises:
(a) 10-50 wt.-% of a random-heterophasic PP-copolymer having a C₂ content of 5-35% and having a MFR 2.0-15 g/10min;
(b) 1-60 wt.-% of a heterophasic PP copolymer having a C₂ content of 5-35% and having a MFR 5-14 g/10min;
(c) 20-30 wt.-% of a polyamide;
(d) 15-25 wt.-% of an elastomeric C2-C8-copolymer;
(e) 1-10 wt.-% of a processing aid; and
(f) 0.1-10 wt.-% of a lubricant;
whereby the weight percentages add up to 100 wt.-%.

In a especially preferred embodiment the thermoplastic alloy composition if it is intended for use in a calendering process, comprises:
(a) 10-35 wt.-% of a random-heterophasic PP-copolymer having a C₂ content of 10-30% and having a MFR 2.0-15 g/10min;
(b) 1-60 wt.-% of a heterophasic PP copolymer having a C₂ content of 10-30% and having a MFR 5-14 g/10min;
(c) 20-30 wt.-% of a polyamide;
(d) 15-25 wt.-% of an elastomeric C2-C8-copolymer;
(e) 1-10 wt.-% of a processing aid; and
(f) 0.1-5 wt.-% of a lubricant;
whereby the weight percentages add up to 100 wt.-%.

The above mentioned polyolefin composition is convertible into sheets, films, fibers, and other moldable products that are sealable with dielectric heat generated by radio-frequencies and are free of gel-like and surface irregularities. Moreover, said composition has superior physical-mechanical properties, flexibility in particular. Consequently, the sheets and films obtained from the composition of the present invention are particularly useful for use in packaging, as well as for other applications that require high flexibility, softness and dielectric heat sealability, in particular for calendaring and embossing methods.

In more detail, the thermoplastic alloy composition comprises the following components in further preferred ranges:

As component (a), 10-70 wt.-%, preferably 10-50 wt.-%, most preferably 10-35 wt.-% of a random-heterophasic PP-copolymer having a C₂ content of 1 to 40%, preferably 5 to 35% and having a MFR 0.1-15 g/10min, preferably 0.1-14 g/10min, more preferably 0.1-10 g/10min is used in accordance with the teachings of the invention. Said random-heterophasic PP copolymer is preferably a soft raheco which is, alone, suitable for use on conventional blown film lines. It has very good tear and impact strength and excellent heat sealing characteristics. Said random-heterophasic PP copolymer is very soft due to the high molecular weight and mixable with the other grades in the recipe that is needed for a flexible skin. At the same time, the low temperature properties are excellent with soft surface. Said random-heterophasic PP copolymer is easy to process and has a smooth surface from die that is easy to emboss, mangle for glossiness or to stretch even to thin film.

The abbreviation "MFR" used in the invention means "Melt Flow Rate" of the respective compound at 230°C and 2.16 kg load and was determined according to ISO 1133.

As component (b), 1-80 wt.-%, preferably 20-70 wt.-%, most preferably 30-50 wt.-% of a heterophasic PP copolymer having a C₂ content of 1 to 40%, preferably 5 to 35 wt.-% and having a MFR of 0.2 to 15 g/10min, preferably 0.2 to 14 g/10min, more preferably 0.2 to 10 g/10min is used. For fiber and injection moulding, a product with higher MFR should be chosen, e.g. 5-14 g/10min. This component is part of the body and the MFR should vary with the application. The component could be used in various weight percentages, depending on the intended product and processing method. Said heterophasic PP copolymer is preferably a high molecular weight, low melt flow rate polypropylene block copolymer having a high impact strength, good softness, low emission and easy to mix with other grades.

As component (c), polyamides are used. The employed polyamide can be an amorphous or partially crystalline polyamide, wherein partially crystalline polyamides are preferred because of their thermal dimensional stability. The polyamide preferably has a molecular weight of at least approximately 1000, preferably at least 5000. The polyamides can be produced by polycondensation of equimolar amounts of saturated dicarboxylic acids with 4 to 12 carbon atoms, preferably 6 to 12 carbon atoms, per molecule with a diamine containing 4 to 12 carbon atoms per molecule. Suitable polyamides can also be produced by ring-opening polymerization of lactams. Examples of suitable polyamides include polyhexamethylene adipic acid amide (Nylon 6,6), polyhexamethylene sebacic acid amide (Nylon 6,10), polyhexamethylene dodecane dicarboxylic acid amide (Nylon 6,12), poly-ε-caprolactam (Nylon 6) or polylauric acid lactam. Further, polyamides which have been produced by copolycondensation of at least two of the above-mentioned polymers or their synthesis components can also be used. The polyamides are preferably linear and have a melting point above approximately 200°C. The polyamide content is approximately 20 to 35 percent by weight, preferably approximately 20 to 30 percent by weight. As example, Durethan obtainable from Dupont can be used as component (c).

As component (d), an elastomeric C2-C8-copolymer, preferably with 20 to 25% octene, melt flow index like 0.75 to 1.25 dg/min at 100°C/2.16 kg and density of 0.867 - 0.873 g/cm³ is used. Said copolymer is an ethylene-octene copolymer that provides excellent flow properties and imparts good heat aging, compression set and weather resistance properties. Furthermore, said polymer balances stiffness and ductility, producing a higher modulus PP copolymer mixture. In addition, said polymer mixture made with said copolymer (d) maintain their integrity in high-impact applications, even at -30°C. Combined with good flowability and part fill, this integrity allows downgauging to thinner parts, helping to reduce material and part costs. The elastomeric C2-C8-copolymer content is approximately 15 to 35 percent by weight, preferably approximately 15 to 25 percent by weight.

Said melt flow index at 190°C at 2.16 kg load was measured according to ASTM D1238, while the density was determined according to ISO 1183 if not otherwise indicated.

As component (e), 1-10 wt.-% of a processing aid is here intended to serve as compatibilisator for the other ingredients of the mixture. Said processing aids are polymers which are mainly used to improve the performance of the polyolefins and other thermoplastics. Impact resistance properties of these plastics at low and ambient temperatures are enhanced by the incorporation of said processing aid polymers. Also, said polymers permit the compatibilisation of some of the other compounds which are dissimilar plastics to allow combinations of properties that could not be achieved otherwise.

As preferred processing aids, polymers consisting of block segments of styrene monomer units and rubber monomer units can be used. The most common structures are the linear A-B-A block types: styrene-butadiene-styrene (SBS), styrene-isoprene-styrene (SIS), styrene-ethylene/butylene-styrene type (SEBS) or styrene-ethylene/propylene-styrene (SEPS). In addition to the A-B-A type polymers, there are specialized polymers of the radial (A-B)n type: (styrene-butadiene)n or (styrene-isoprene)n, and diblock (A-B) type: styrenebutadiene (SB), styrene-ethylene/propylene (SEP) and styrene-ethylene/butylene (SEB). Melt flow of 14-28 g/10min (230°C-5kg), Melanic Anhydride, Bound 1.4-2.0 w%, Specific Gravity 0.91 g/cc.

As component (f), 0.1-15 wt.-%, preferably 0.1-10 wt.-%, more preferably 0.1-5 wt.-% of a lubricant or mixtures thereof are compounded with the polymer components. As said lubricant, conventional lubricants for improving the processability can be used as release and antiblocking agent for polyolefins flow promotion, internal lubricant and antiblocking and slip agent.

Component (f) is an aid for release of the molten polymer from the hot mills when the polymer is processed on a calander. Several waxes can be used whereby blooming and also odour are sometimes co-effects that must be avoided. Depending on the choice of the component (f) the amount can vary in the defined range.

In addition to the above components, the composition of the present invention can contain additives commonly used in polymer materials, such as stabilizers, pigments and fillers.

In accordance with the invention, various recipes on the basis of the inventive composition can be provided for various applications. As it can be easily understood from the skilled man, the application machines for the products need the right viscosity and demands of the mechanical- and physical properties that are required can be achieved with the right combination of the mentioned products.

Furthermore, processing PP grades on high frequency welding machines where the inventive compositions are to be used in the current PVC machinery is dependent of the polymer choice. The HF-welding properties in this grade are solved within the grade recipe according to the invention.

As key properties for the composition according to the invention can be mentioned softness, low stress whitening, melt strength, elongation, impact, tear resistance, bond to substrate, grain retention, fogging, emission, and odour.

As a clear advantage compared to PVC is the reduced density of the product giving weight saving potentials, good ageing properties and accepted recycle systems.

A further important characteristic of the inventive composition is that, after processing the grade in extruders, the composition can afterwards be assembled by confectioning in high frequency welding machines (27000 Hz).

"High-frequency" in the sense of the present invention means applying a high-frequency alternating field with high intensity to the thermoplastic composition, whereby the polar groupings of the thermoplastic composition carry out oscillations corresponding to the excitation frequency produced during the process in the high-frequency welding machines. This oscillation of the polar groups leads to heat development in the thermoplastic. The frequency to be used for this process ranges from about 1 to about 30 MHz, wherein 27 MHz, especially 27.12 MHz, is the most common welding frequency.

The production of the grade is done with a conventional compounding extruder, e.g. a twin screw extruder, and with loss in weight feeders with remote adjusting device to the complete process computer. Rising the temperature over 250°C in middle part of the extruder for then to decrease again to 230°C before cooling to pelletizing leads to an improved homogenisation of the polymers in the molten state.

### Examples

Depending on the specific uses, various preparation methods for molded articles can be used and the respective inventive composition can be adapted to said specific uses within the specified ranges as claimed.

All the used starting materials of the following examples are commercially available and indicated as follows:
As random-heterophasic PP-copolymer: SA233CF and SD233CF, supplied by Borealis
As heterophasic PP-copolymer: BA202E, KSR4525, supplied by Borealis
As polyamid: Durethan B30, supplied by Bayer
As elastomeric C2-C8-copolymer: Engage 8100, supplied by DuPont Dow Elastomers
As lubricant: Marklube 280, supplied by Cromton or Licolube FA 1, supplied by Clariant
As processing aid: Kraton 1901X, supplied by Kraton or Vanfree VAM, supplied by Vanderbilt Company

However, these compounds are exemplary only and not intended to limit the invention, as other products/compounds can be used, respectively.

### Example 1

As a recipe composition for **Blowmoulding** of the polyolefin block:

| | |
|---|---|
| SA233CF | 13wt.% |
| BA202E | 40wt.% |
| Engage 8100 | 25wt.% |
| Durethan B30 | 20wt.% |
| Kraton 1901X | 2wt.% |

An Uniloy MSA/S blow moulding machine was used with a temperature of 160 to 200°C on the barrel and keeping a melt temperature in the range of 205-220°C.

### Example 2

As a recipe composition for **Sheet** extrusion of the polyolefin block:

| | |
|---|---|
| SD233CF | 13wt.% |
| KSR4525 | 40wt.% |
| Engage 8100 | 25wt.% |
| Durethan B30 | 20wt.% |
| Kraton 1901X | 2wt.% |

Sheets were made on a Kuhne-line GA3/900. The barrel temperatures were set to 180 and up to 220°C, and the die range from 220 to 250°C.

### Example 3

As a recipe composition for **Blown film** extrusion of the polyolefin block:

| | |
|---|---|
| SA233CF | 13wt.% |
| BA202E | 40wt.% |
| Engage 8100 | 25wt.% |
| Durethan B30 | 20wt.% |
| Kraton 1901X | 2wt.% |

The films are made on an Ankutec FBA/AO/300/30 with a temperature of 190 to 240°C on the barrel, die gap of 1 mm, blow-up ratio 3:1.

### Example 4

As a recipe composition for **Coating and Castfilm** extrusion of the polyolefin block:

| | |
|---|---|
| SD233CF | 13wt.% |
| KSR4525 | 40wt.% |
| Engage 8100 | 25wt.% |
| Durethan B30 | 20wt.% |
| Kraton 1901X | 2wt.% |

0.3 mm thick films is made on a Kuhne-line GA3/900. The barrel temperatures are set to 220 and up to 260°C and then the die to 230 to 250°C. The chill roll temperature is 25°C, line speed 8 m/min and using an air knife.

### Example 5

As a recipe composition for **Injection Moulding** of the polyolefin block:

| | |
|---|---|
| SD233CF | 13wt.% |
| KSR4525 | 40wt.% |
| Engage 8100 | 25wt.% |
| Durethan B30 | 20wt.% |
| Kraton 1901X | 2wt.% |

A Nestal 300 machine was used. A temperature of 220 to 260°C on the barrel and a rather low injection speed was used. Tool temperatures was 15 to 30°C dependent of the shape.

### Example 6

As a recipe composition for **Sheet calendering** of the polyolefin block:

| | |
|---|---|
| SA233CF | 29 wt.% |
| KSR4525 | 18 wt.% |
| Engage 8100 | 25 wt.% |
| Durethan B30 | 20 wt.% |

| | |
|---|---|
| Kraton 1901X | 2 wt.% |
| Marklube 280 | 1.5 wt.% |
| Vanfree vam | 1 wt.% |

Schwabenthan Polymix 150P calendering machine was used. The temperature was 161°C.

### Preparation

For soft sheet and easy welding, the thickness of the sheet or foil can vary from 2.0mm and down to 0.005mm. Welding of thicker sheets than 0.5mm demand stronger effect than for PVC. Preheating of the sheet may be used to speed up the process.

The various requirements for the sheets and moulded articles and applications thereof are explained below.
As blow molded part, the typical thickness is 0.2 to 0.5mm for example to sun-visors with insert and welded ends. As extruded sheet, the typical thickness is 0.2 to 0.5mm as inserts or pockets for interior. A blown film can typical be blown from 0.020 to 0.5mm, but in this inventive application as liners, barrier and laminates it will preferably be from 0.05 to 0.5mm.

For coating, the grades can be used for coating of carriers like fabric, textiles, none woven, paper, foils or other substrates. The products can be used for preparing artificial leather or roller shades, for seat or furniture upholstery, for pockets and soft mirrors in applications in doors or facia panels. Also tarpaulins and roofing can be made, using the inventive PP grade. Injection moulded parts of this grade can typically be attachments lugs, fixing devices or embossed labels for HF welding. None woven sheet for HF welding is actual as reinforcing carriers, backing for stitchery and seat skin. Also filters for person and product protection can be welded with this technique.

According to a preferred embodiment, the inventive composition, for example as sheets, can be processed by using the following HF welding method.

The composition prepared as described above was converted into a sheet with a thickness of 200 to 500 micrometers by extruding it at 230°-250°C through a flat die extruder. The resulting sheets have been test welded with a radio frequency sealing apparatus with a heatable electrode operating at 27 MHz and equipped with a pressure tool.

The sealing conditions were as follows:
Machine: FIAB, Type 2002, Series no. 1068, 27MHz, 2 kW Tool: 300mm x 5mm brass with Teflon tape.
Base: table covered with Mylar or Teflon tape
Parameters:
   Tuning wave. 80-90%
   Welding Time 7sec. Holding time after is also 7sec.
   Pressure 1.5 bar
   Sheet thickness 0.2-0.5mm

After start, the welding begins when the ampere meter starts to indicate current. For this machine above, it increases from 0.25 up to 0.4 amp. The press is adjusted to only force the molten polymer sheets together, and keep it until the weldzone is frozen. Using a sheet thickness of 0.3mm will lead to good welding results which are sufficiently strong to not be torn apart in the weldzone. Breakage happens besides the weldzone, and the strength is depending of the sheet or notches in the weld edges. As it is clear thicker sheets and moulded articles can also be processed, but need more power and longer time is needed. Accordingly, thinner films and fibres need less power and time.

## Claims

1. A thermoplastic alloy composition comprising a blend of polypropylene copolymers, polyamide, ethylene propylene rubber and optionally further ingredients like fillers, additives, comprising:
(a) 10-70 wt.-% of a random-heterophasic PP-copolymer having a C₂ content of 1-40% and having a MFR 0.1-15 g/10min;
(b) 1-80 wt.-% of a heterophasic PP copolymer having a C₂ content of 1-40% and having a MFR 0.2-15 g/10min;
(c) 20-35 wt.-% of a polyamide,
(d) 15-35 wt.-% of an elastomeric C2-C8-copolymer,
whereby the weight percentages add up to 100 wt.-%.

2. A thermoplastic alloy composition according to claim 1, comprising:
(a) 10-70 wt.-% of a random-heterophasic PP-copolymer having a C₂ content of 5-35% and having a MFR 0.1-15 g/10min;
(b) 1-80 wt.-% of a heterophasic PP copolymer having a C₂ content of 5-35% and having a MFR 0.2-14 g/10min;
(c) 20-35 wt.-% of a polyamide,
(d) 15-35 wt.-% elastomeric C2-C8-copolymer,
whereby the weight percentages add up to 100 wt.-%.

3. A thermoplastic alloy composition according to claim 1 or 2, comprising additionally 1-10 wt.-% of a processing aid and/or 0.5-15 wt.-%, preferably 0.1-10 wt.-%, more preferably 0.1-5 wt.-% of a lubricant.

4. The thermoplastic alloy composition according to claim 1 for use in a blow-moulding process, comprising:
(a) 10-70 wt.-% of a random-heterophasic PP-copolymer having a C₂ content of 1-40% and having a MFR 0.1-2.0 g/10min;
(b) 20-80 wt.-% of a heterophasic PP copolymer having a C₂ content of 1-40% and having a MFR 0.2-2.0 g/10min;
(c) 20-35 wt.-% of a polyamide;
(d) 15-35 wt.-% of an elastomeric C2-C8-copolymer; and
(e) 1-10 wt.-% of a processing aid;
whereby the weight percentages add up to 100 wt.-%.

5. The thermoplastic alloy composition according to claim 1 for use in a sheet extrusion process or a blown film process, comprising:
(a) 10-70 wt.-% of a random-heterophasic PP-copolymer having a C₂ content of 1-40% and having a MFR 0.1-2.0 g/10min;
(b) 1-60 wt.-% of a heterophasic PP copolymer having a C₂ content of 1-40% and having a MFR 0.2-2.0 g/10min;
(c) 20-35 wt.-% of a polyamide;
(d) 15-35 wt.-% of an elastomeric C2-C8-copolymer; and
(e) 1-10 wt.-% of a processing aid; whereby the weight percentages add up to 100 wt.-%.

6. The thermoplastic alloy composition according to claim 1 for use in a coating and/or castfilm process or an injection moulding process, comprising:
(a) 10-70 wt.-% of a random-heterophasic PP-copolymer having a C₂ content of 1-40% and having a MFR 2.0-15 g/10min;
(b) 1-60 wt.-% of a heterophasic PP copolymer having a C₂ content of 1-40% and having a MFR 5-14 g/10min;
(c) 20-35 wt.-% of a polyamide;
(d) 15-35 wt.-% of an elastomeric C2-C8-copolymer;
(e) 1-10 wt.-% of a processing aid. whereby the weight percentages add up to 100 wt.-%.

7. The thermoplastic alloy composition according to claim 6 for use in a calendering process, comprising additionally as compound (f) 0.1-15 wt.-% of a lubricant.

8. The thermoplastic alloy composition of claim 7 for use in a calendering process, comprising:
(a) 10-50 wt.-% of a random-heterophasic PP-copolymer having a C₂ content of 5-35% and having a MFR 2.0-15 g/10min;
(b) 1-60 wt.-% of a heterophasic PP copolymer having a C₂ content of 5-35% and having a MFR 5-14 g/10min;
(c) 20-30 wt.-% of a polyamide;
(d) 15-25 wt.-% of an elastomeric C2-C8-copolymer;
(e) 1-10 wt.-% of a processing aid; and
(f) 0.1-10 wt.-% of a lubricant; whereby the weight percentages add up to 100 wt.-%.

9. The thermoplastic alloy composition of claim 7 for use in a calendering process, comprising:
(a) 10-35 wt.-% of a random-heterophasic PP-copolymer having a C₂ content of 10-30% and having a MFR 2.0-15 g/10min;
(b) 1-60 wt.-% of a heterophasic PP copolymer having a C₂ content of 10-30% and having a MFR 5-14 g/10min;
(c) 20-30 wt.-% of a polyamide;
(d) 15-25 wt.-% of an elastomeric C2-C8-copolymer;
(e) 1-10 wt.-% of a processing aid; and
(f) 0.1-5 wt.-% of a lubricant; whereby the weight percentages add up to 100 wt.-%.

10. Sheet or film comprising the composition of any of claims 1 to 3 and 5 to 9.

11. Moulded article wherein at least one layer comprises the composition of any of claims 1 to 4 and 6.

12. Use of the composition of any of claims 1 to 9 in a high frequency welding process.

13. Article made of or coated with a layer comprising the composition of any of claims 1 to 9.

14. Article according to claim 12 wherein the layer is coated with a method making use of a high frequency welding process.
